(19) Europäisches Patentamt
European Patent Office
Office européen des brevets

(11) **EP 1 276 628 B1**

(12) **EUROPÄISCHE PATENTSCHRIFT**

(45) Veröffentlichungstag und Bekanntmachung des Hinweises auf die Patenterteilung:
**05.08.2009 Patentblatt 2009/32**

(51) Int Cl.:
***B60K 31/04*** *(2006.01)* ***B60T 7/12*** *(2006.01)*

(21) Anmeldenummer: **01927603.9**

(22) Anmeldetag: **24.03.2001**

(86) Internationale Anmeldenummer:
**PCT/DE2001/001151**

(87) Internationale Veröffentlichungsnummer:
**WO 2001/079015 (25.10.2001 Gazette 2001/43)**

(54) **VERFAHREN ZUR ADAPTIVEN ABSTANDS- UND/ODER FAHRGESCHWINDIGKEITSREGELUNG BEI EINEM KRAFTFAHRZEUG**

METHOD FOR ADAPTIVE DISTANCE AND OR DRIVING SPEED ADJUSTMENT IN A MOTOR VEHICLE

PROCEDE DE REGULATION AUTO-ADAPTATIVE DE DISTANCE ET/OU DE VITESSE DE ROULAGE POUR UN VEHICULE AUTOMOBILE

(84) Benannte Vertragsstaaten:
**DE FR GB**

(30) Priorität: **17.04.2000 DE 10019189**

(43) Veröffentlichungstag der Anmeldung:
**22.01.2003 Patentblatt 2003/04**

(73) Patentinhaber: **ROBERT BOSCH GMBH**
**70442 Stuttgart (DE)**

(72) Erfinder:
- **HELLMANN, Manfred**
  **71706 Hardthof (DE)**
- **WINNER, Hermann**
  **76467 Bietigheim (DE)**
- **LAUXMANN, Ralph**
  **70825 Korntal-Muenchingen (DE)**

- **IRION, Albrecht**
  **70563 Stuttgart (DE)**

(56) Entgegenhaltungen:
| | |
|---|---|
| **EP-A- 0 992 388** | **WO-A-99/20508** |
| **US-A- 3 725 921** | **US-A- 5 665 026** |
| **US-A- 5 731 977** | **US-A- 5 752 214** |

- **PATENT ABSTRACTS OF JAPAN vol. 1995, no. 02, 31. März 1995 (1995-03-31) & JP 06 320983 A (MITSUBISHI ELECTRIC CORP), 22. November 1994 (1994-11-22)**
- **PATENT ABSTRACTS OF JAPAN vol. 016, no. 041 (M-1206), 31. Januar 1992 (1992-01-31) & JP 03 246124 A (TOYOTA MOTOR CORP), 1. November 1991 (1991-11-01)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur adaptiven Abstands-und/oder Fahrgeschwindigkeitsregelung bei einem Kraftfahrzeug nach den Oberbegriffen der nebengeordneten Ansprüche. Gattungsgemäße Regelsysteme werden beispielsweise auch als Adaptive-Cruise-Control-System (ACC-System) bezeichnet.

Stand der Technik

Aus dem SAE-Paper 961010 (SAE Technical Paper Series 961010, International Congress & Exposition, Detroit, February 26-29, 1996, "Adaptive Cruise Control System - Aspects an Development Trends", Winner, Witte, Uhler, Lichtenberg, Robert Bosch GmbH) ist ein auf Radarbasis basierendes ACC-System bekannt. Hierbei ist der mehrzielfähige Radarsensor an der Frontseite eines Kraftfahrzeugs angebracht, um Abstände und Relativgeschwindigkeiten zu vorausfahrenden Fahrzeugen zu bestimmen. Die von dem Radarsystem ermittelten Daten werden über ein Bussystem einer Kontrolleinheit zugeführt. Diese Kontrolleinheit bestimmt anhand der übermittelten Radardaten und des Fahrerwunsches eine entsprechende Beschleunigungsanforderung, die wiederum an eine Längsregeleinheit übermittelt wird: Die Längsregeleinheit steuert entsprechend der Beschleunigungsanforderung der Kontrolleinheit Aktuatoren an. Diese Aktuatoren können der Motor des Kraftfahrzeugs, die Kupplung oder die Bremsen des Kraftfahrzeugs sein. Aufgrund der entsprechenden Ansteuerung der Aktuatoren wird sich ein bestimmtes Verhalten des Kraftfahrzeugs ergeben, dass wiederum auf die Kontrolleinheit rückgekoppelt ist und somit eine Regelschleife bildet. In Abhängigkeit von der entsprechenden Beschleunigungsanforderung wird entweder der Antriebsstrang oder die Bremsen aktiviert. Bei dieser Auswahl wird eine geschätzte Steigung des Fahrweges berücksichtigt. Zusätzlich müssen die Grenzen bzw. die physikalischen Limitierungen des Antriebsstrangs und des Bremssystems bekannt sein oder müssen entsprechend berechnet werden.

Ein Verfahren nach dem Oberbegriff des Anspruchs 1 ist aus der EP 0 922 388 bekannt. Vorteile der Erfindung

Durch das Verfahren gemäß Anspruch 1 wird erreicht, dass der Übergang vom ersten Betriebsmodus, in dem der Motor, also der Antrieb des Kraftfahrzeugs, angesteuert wird in den zweiten Betriebsmodus, in dem die Bremse des Kraftfahrzeugs angesteuert wird, komfortabel und ohne merklichen Ruck für den Fahrer des Kraftfahrzeugs vorgenommen wird. Durch das erfindungsgemäße Verfahren wird weiterhin erreicht, dass unnötige Bremsenansteuerungen und damit verbundenes Bremslichtflackern verhindert wird.

Der vorgebbare Wertebereich für den Bremsmodus wird in Abhängigkeit von einer ein Schleppmoment des Motors repräsentierenden Größe ($a_{Schlepp}$) bestimmt und umfasst alle Werte, die unterhalb eines Schwellenwerts ($a_{Schwell}$) liegen. Der Schwellenwert ($a_{Schwell}$ wird durch Subtraktion einer eine Hysterese repräsentierenden Größe ($a_{Hysterese}$) von der das Schleppmoment repräsentierenden Größe ($a_{Schlepp}$) gebildet. Dadurch wird ein Schwellenwert ($a_{Schwell}$) für den Übergang vom Motor in den Bremsbetrieb gebildet, der zusätzlich zum Schleppmoment des Motors einen gewissen Hysteresewert berücksichtigt. Hierdurch wird in besonders vorteilhafter Weise erreicht, dass es nicht zu einem "flackernden Umschalten" zwischen der Ansteuerung des Motors und der Ansteuerung der Bremse kommt.

Die die Hysterese repräsentierende Größe ($a_{Hysterese}$) nimmt ab einem bestimmbaren Zeitpunkt ($T_{Bremse}$) linear mit der Zeit (t) von einem Maximalwert ($a_{HystereseMax}$) auf einen Minimalwert ($a_{HystereseMin}$) ab.

Vorteilhafte Weiterbildungen sind in den Unter ansprüchen angegeben.

Hierbei wird der bestimmbare

Zeitpunkt ($T_{Bremse}$) vorteilhaft so gewählt, dass dies der Zeitpunkt ist, an dem die die Sollverzögerung oder eine Sollbeschleunigung repräsentierende Größe ($a_{Soll}$) kleiner als die ein Schleppmoment repräsentierende Größe ($a_{Schlepp}$) wird. Durch diese Weiterbildung wird erreicht, dass ab dem Zeitpunkt, ab dem das ACC-Steuergerät eine Beschleunigungsanforderung ($a_{Soll}$) an den Längsregler (LOC) liefert, die kleiner als das Schleppmoment des Motors ($a_{Schlepp}$) ist, der Hysteresewert ($a_{Hysterese}$) kontinuierlich verringert wird. Hierdurch wird weiterhin erreicht, dass in dem Fall, in dem die Beschleunigungsanforderung ($a_{Soll}$) ein konstanten Wert aufweist, der kleiner als die das Schleppmoment des Motors repräsentierende Größe ($a_{Schlepp}$), bzw. das Schleppmoment des Motors, ist, eine Umschaltung in den Bremsbetrieb, bzw. den zweiten Betriebsmodus, spätestens dann vorgenommen wird, wenn die die Hysterese repräsentierende Größe ($a_{Hysterese}$) auf den Minimalwert ($a_{HystereseMin}$) abgesunken ist. Eine besonders vorteilhafte Ausgestaltung der Steigung, mit der die die Hysterese repräsentierende Größe ($a_{Hysterese}$) linear mit Zeit abnimmt, sieht vor, dass die Steigung proportional zu der Differenz aus der die Sollverzögerung oder die Sollbeschleunigung repräsentierende Größe ($a_{Soll}$) und der das Schleppmoment repräsentierenden Größe ($a_{Schlepp}$) ist. Diese Ausgestaltung der Steigung führt besonders vorteilhaft zu einer hohen Dynamik des Ansprechverhaltens. Insbesondere dann, wenn der Fahrer des Kraftfahrzeugs eine besonders starke Verzögerung wünscht, also beispielsweise das Bremspedal stark betätigt, führt die erfindungsgemäße Ausgestaltung der Steigung zu einem schnellen Übergang in den Bremszweig. Dadurch, dass die hohe Sollverzögerungsanforderung ($a_{Soll}$) vorliegt, wird die die Hysterese repräsentierende Größe ($a_{Hysterese}$)

sehr schnell in Richtung der Minimalwertes ($a_{HystereseMin}$) reduziert. Je nach Ausgestaltung des minimalen Hysteresewertes ($a_{HystereseMin}$) kann es im Extremfall zu einem direkten Übergang vom Antriebszweig in den Bremszweig kommen.

Eine weitere vorteilhafte Weiterbildung des ersten Verfahrens sieht vor, dass die ein Schleppmoment repräsentierende Größe ($a_{Schlepp}$) in Abhängigkeit von der Steigung des Fahrweges bestimmt wird auf dem sich das Kraftfahrzeug befindet. Hierzu kann vorteilhafter Weise eine Steigungsschätzung durchgeführt werden, die insbesondere nach einem Bremseingriff in einem Schnellverfahren durchgeführt wird. Ein solches Schnellverfahren kann beispielsweise auf einer Steigungsschätzung wenigstens anhand einer ein Motorausgangsmoment repräsentierenden Größe und einer eine Ist-Beschleunigung des Kraftfahrzeugs repräsentierenden Größe durchgeführt werden. Durch diese vorteilhafte Ausgestaltung ist es möglich, dass zu jedem Zeitpunkt in dem kein Bremseingriff vorliegt eine Schätzung der Steigung vorgenommen werden kann. Diese Ausgestaltung ist insbesondere dann von Bedeutung, wenn sich das Kraftfahrzeug auf Fahrwegen mit großen Steigungen und Gefällen, beispielsweise im Gebirge, befindet, da hier der Einfluß der Steigung des Fahrweges auf die ein Schleppmoment repräsentierende Größe ($a_{Schlepp}$) besonders groß ist.

Beschreibung von Ausführungsbeispielen

Figur 1 zeigt eine Regelschleife eines Systems zur adaptiven Abstands- und/oder Fahrgeschwindigkeitsregelung wie sie aus dem Stand der Technik, beispielsweise aus dem SAE-Paper 961010, bekannt ist.

Figur 2 zeigt ein Ablaufdiagramm zur Durchführung des ersten erfindungsgemäßen Verfahrens.

Figur 3 zeigt ein Ablaufdiagramm zur Durchführung des zweiten erfindungsgemäßen Verfahrens.

Figur 4 zeigt den Übergang vom ersten in den zweiten Betriebsmodus und umgekehrt.

Figur 5 zeigt die Abhängigkeit der die Hysterese repräsentierende Größe ($a_{Hysterese}$) von der Zeit.

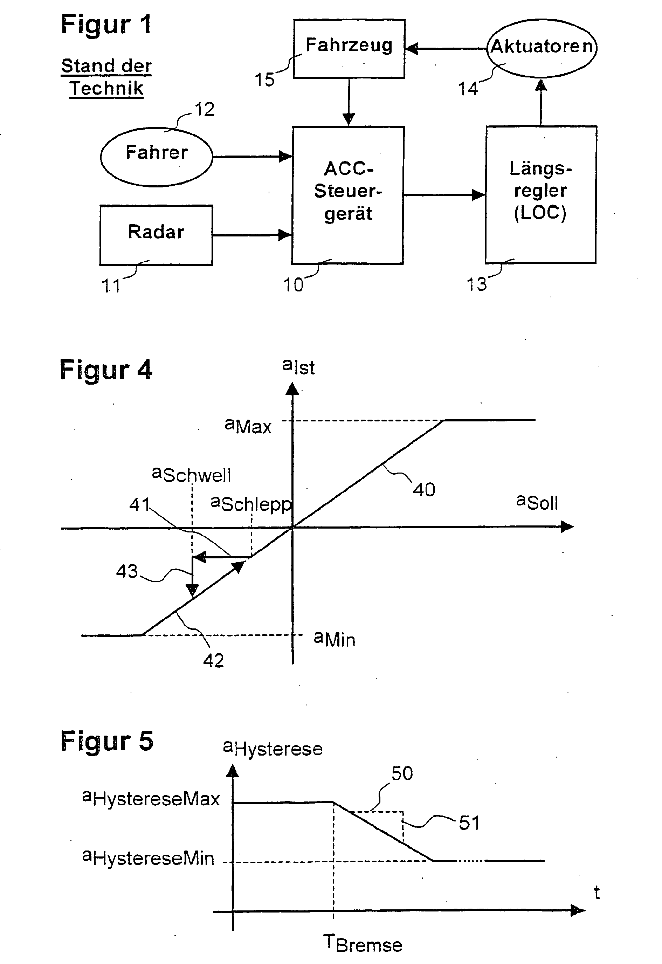

Figur 1 zeigt eine adaptive Abstands- und/oder Fahrgeschwindigkeitsregelung für ein Kraftfahrzeug, wie sie aus dem Stand der Technik bekannt ist. Hierbei stellt eine zentrale Kontrolleinheit 10 (ACC-Controller, ACC-Steuergerät), den zentralen Punkt der Regelung dar. Der Kontrolleinheit 10 werden von einem Radarsensor 11 Geschwindigkeits- und Abstandsdaten vorausfahrender Fahrzeuge übermittelt. Das hier dargestellte Radarsystem 11 basiert auf einer hochfrequenten Mikrowellenstrahlung, kann alternativ aber auch als LIDAR oder Infrarotsensor ausgeführt sein. Hinsichtlich der Radartechnik ist das erfindungsgemäße Verfahren nicht auf einen in den SAE-Paper 961010 beschriebenen FMCW-Radar beschränkt, sondern ist auch in Verbindung beispielsweise mit einem nach dem Impulsradarprinzip arbeitenden System einsetzbar. Die von der Radareinheit 11 an die Kontrolleinheit 10 übermittelten Geschwindigkeitsdaten vorausfahrender Fahrzeuge (und auch anderer detektierter Objekte, beispielsweise stehende Objekte am Straßenrand) sind Relativgeschwindigkeitswerte bezogen auf die Geschwindigkeit des eigenen Fahrzeugs. Weiterhin werden der Kontrolleinheit 10 vom Fahrer 12 des Kraftfahrzeugs Signale übermittelt. Diese Signale können beispielsweise Gaspedalstellungen, Bremseingriffe, Lenkbewegungen aber auch Bedienfunktionen für das ACC-System sein. Aus den von dem Fahrer 12 und der Radareinheit 11 gelieferten Daten bestimmt die Kontrolleinheit 10 eine Beschleunigungsanforderung, die an eine Längsregeleinheit 13 (Longitudinalcontrol, LOC) übermittelt wird. Die Längsregeleinheit 13 hat den Zweck, die von der Kontrolleinheit 10 übermittelte Beschleunigungsanforderung in entsprechende Ansteuersignale für die Aktuatoren 14 umzusetzen. Die Aktuatoren 14 können im allgemeinen beschleunigende oder verzögernde Mittel sein. Als beschleunigendes Mittel wäre beispielsweise eine Drosselklappenansteuerung denkbar, während als verzögerndes Mittel beispielsweise ein Eingriff in das (aktive) Bremssystem angesehen werden kann. Entsprechend der Ansteuerung der Aktuatoren 14 ergibt sich ein entsprechendes Fahrverhalten des Fahrzeugs 15. Diese aktuellen Fahrzeugzustandsdaten werden von dem Fahrzeug 15 an die Kontrolleinheit 10 übermittelt. Durch diese Rückkopplung der gegenwärtigen Fahrzeugdaten ist die aus Kontrolleinheit 10, Längsregeleinheit 13, Aktuatoren 14 und Fahrzeug 15 bestehende Regelschleife vollständig.

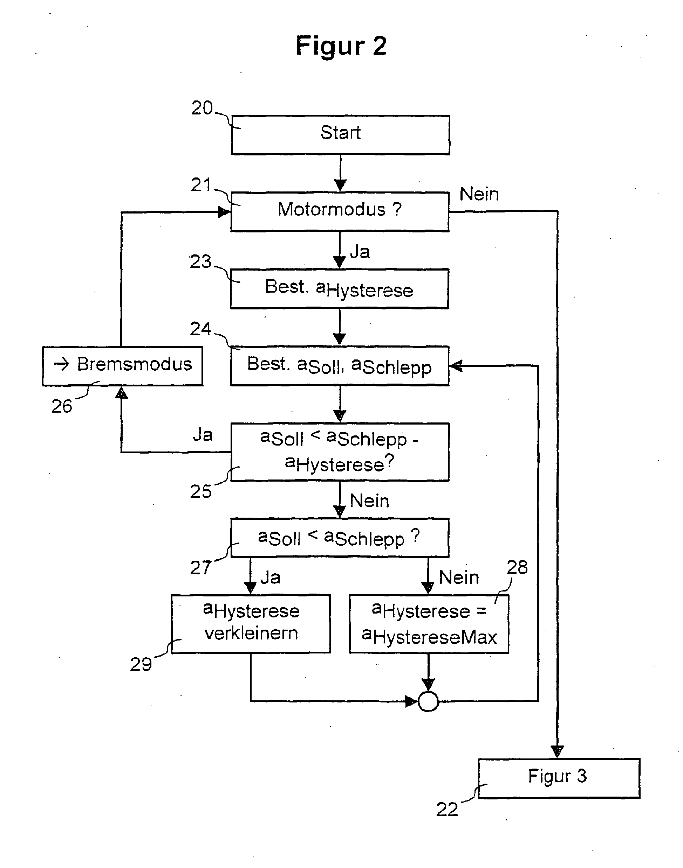

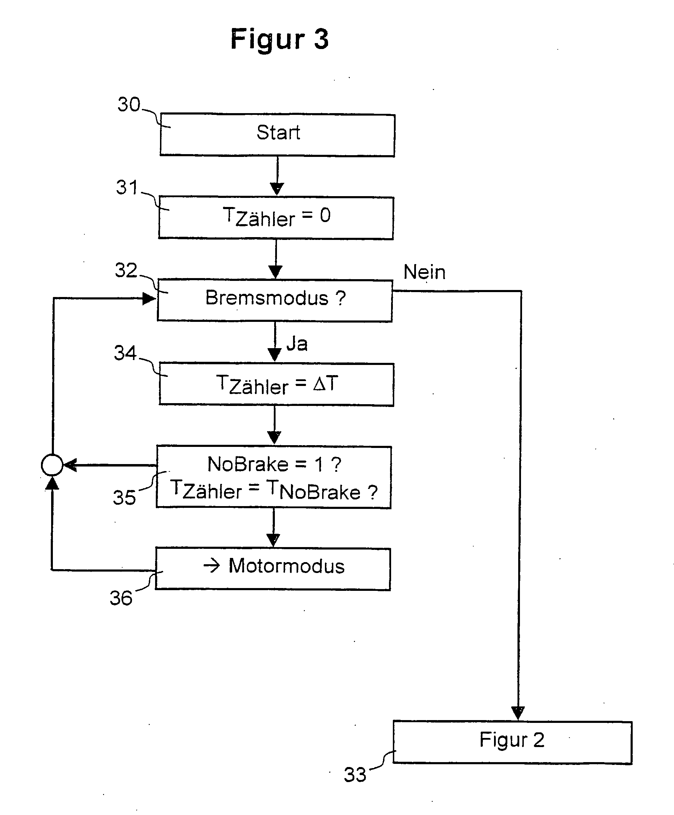

Figur 2 zeigt ein Ausführungsbeispiel des ersten erfindungsgemäßen Verfahrens, dass zum Übergang vom Antriebsmodus in den Bremsmodus dient. Hierbei wird nach dem Start 20 des Verfahrens im Schritt 21 zunächst überprüft, ob sich das Fahrzeug derzeit im ersten Betriebsmodus bzw. dem Motormodus befindet. Ist dies nicht der Fall, wird in Schritt 22 zum Ausführungsbeispiel des zweiten erfindungsgemäßen Verfahrens nach Figur 3 übergegangen, dass für den Übergang vom Bremsmodus in den Antriebsmodus zur Anwendung kommt. Wird in Schritt 21 festgestellt, dass sich das Fahrzeug im ersten Betriebsmodus/Motormodus befindet, wird zu Schritt 23 übergegangen, in dem der aktuelle Wert für die eine Hysterese repräsentierende Größe ($a_{Hysterese}$) bestimmt wird. Auf die Bestimmung der Größe ($a_{Hysterese}$) wird im Rahmen der Beschreibung zur Figur 5 detaillierter eingegangen. Im weiteren wird im Schritt 24 die Sollbeschleunigung und die Beschleunigung ($a_{Schlepp}$), die durch das Motorschleppmoment hervorgerufen wird, bestimmt. Dies kann beispielsweise in einem ACC-Steuergerät 10 entsprechend Figur 1 geschehen. Im allgemeinen kann die durch das Schleppmoment hervorgerufene Beschleunigung ($a_{Schlepp}$) positive Werte (beispielsweise auf starken Gefällstrecken) oder negative Werte (überwiegender Fall) annehmen. Im weiteren wird in Schritt 25 überprüft, ob die vom ACC-Steuergerät 10 angeforderte Sollbeschleunigung ($a_{Soll}$) kleiner als die Differenz aus Beschleunigung aufgrund des Schleppmoments ($a_{Schlepp}$) und Beschleunigung aufgrund des Hysteresewertes ($a_{Hysterese}$) ist ($a_{Schlepp}$ - $a_{Hysterese}$). Ist dies der Fall, wird im Schritt 26 in den zweiten Betriebsmodus/Bremsmodus übergegangen. Entsprechend des Ausführungsbeispiels folgt auf den Schritt 26 wiederum der bereits beschriebene Schritt 21 in dem abgefragt wird, ob sich das Fahrzeug im Motormodus befindet. Da dies nunmehr nicht der Fall sein wird, da zuvor die Umschaltung in den zweiten Betriebsmodus vorgenommen worden ist, wird das Verfahren zu Schritt 22 übergehen, dass die Verbindung zum in Figur 3 dargestellten Ausführungsbeispiel des zweiten erfindungsgemäßen Verfahrens darstellt.

Wird in Schritt 25 festgestellt, dass die Sollbeschleunigung ($a_{Soll}$) nicht kleiner als die Differenz aus Schleppmomentbeschleunigung ($a_{Schlepp}$) und Hysteresebeschleunigung ($a_{Hysterese}$) ist, wird zu Schritt 27 übergegangen. In Schritt 27 wird überprüft, ob die Sollbeschleunigung ($a_{Soll}$) wenigstens kleiner als die Beschleunigung aufgrund des Schleppmomentes ($a_{Schlepp}$) ist. Ist dies der Fall, wird zu Schritt 28 übergegangen. Dies bedeutet praktisch gesprochen, dass die vom ACC-Steuergerät 10 angeforderte Verzögerung im derzeitigen Fahrzustand ausschließlich durch das Schleppmoment des Motors erreicht werden kann und ein aktiver Eingriff in das Bremssystem bzw. ein Übergang in den zweiten Betriebsmodus nicht erforderlich ist. Entsprechend dieser Situation wird in Schritt 28 der Wert für die Beschleunigungshysterese ($a_{Hysterese}$) auf den maximalen Beschleunigungshysteresewert ($a_{HysterseMax}$) gesetzt und zum bereits beschriebenen Schritt 24 des Verfahrens übergegangen. Hier wird entsprechend der sich veränderten Betriebssituation ein aktualisierter Wert der Sollbeschleunigung ($a_{Soll}$) und der Beschleunigung aufgrund des Schleppmomentes ($a_{Schlepp}$) bestimmt und mit dem Verfahren wie bereits beschrieben fortgefahren.

Wird in Schritt 27 hingegen festgestellt, dass die Sollbeschleunigung ($a_{Soll}$) kleiner ist als die Beschleunigung, die aufgrund des Schleppmomentes hervorgerufen wird ($a_{Schlepp}$), so wird zu Schritt 29 übergegangen, in dem der Wert für die Beschleunigungshysterese ($a_{Hysterese}$) verkleinert wird. Wie die Hysterese ($a_{Hysterese}$) verkleinert wird, und wie der maximale Beschleunigungshysteresewert ($a_{HystereseMax}$) und ein minimaler Beschleunigungshysteresewert ($a_{HystereseMin}$), bis zu dem der Beschleunigungshysteresewert ($a_{Hysterse}$) maximal verkleinert wird, bestimmt wird, wird im Rahmen der Beschreibung zu Figur 5 eingehender beschrieben. Im Anschluß an den Schritt 29, in dem der Beschleunigungshysteresewert ($a_{Hysterese}$) verkleinert wurde, wird ebenfalls, wie bereits nach Schritt 28, zum Schritt 24 übergegangen und mit dem Verfahren entsprechend der vorhergehenden Beschreibung fortgefahren.

Figur 3 zeigt ein Ausführungsbeispiel des zweiten erfindungsgemäßen Verfahrens, dass zum Übergang vom zweiten Betriebsmodus/Bremsmodus in den ersten Betriebsmodus/Antriebsmodus dient. Nach dem Start des erfindungsgemäßen zweiten Verfahrens im Schritt 30 wird in einem Schritt 31 zunächst ein Zeitzähler ($T_{Zähler}$) auf Null gesetzt, der für spätere Verfahrensschritte benötigt wird. Im anschließenden Schritt 32 wird überprüft, ob sich das Kraftfahrzeug im zweiten Betriebsmodus/Bremsmodus befindet. Ist dies nicht der Fall wird zu Schritt 33 übergegangen, der dem Einstieg zur vorbeschriebenen Figur 2 entspricht, bzw. den Übergang in das erste erfindungsgemäße Verfahren, dass den Übergang vom ersten in den zweiten Betriebsmodus darstellt.

Wird in Schritt 32 hingegen festgestellt, dass sich das Kraftfahrzeug im zweiten Betriebsmodus/Bremsmodus befindet, wird zu Schritt 34 übergegangen. Im Schritt 34 wird der Zeitzähler ($T_{Zähler}$), der im Schritt 31 zu Null gesetzt worden ist, auf den Zeitwert $\Delta T$ gesetzt, der dem Zeitraum entspricht, seit das erste mal festgestellt worden ist, dass die Sollbeschleunigung ($a_{Soll}$) größer als die durch das Schleppmoment hervorgerufene Beschleunigung ($a_{Schlepp}$) ist bzw. im allgemeinen Fall, daß eine Anforderung für den ersten Betriebsmodus/Antriebsmodus vorliegt. Um festzustellen, bei welchem Durchlauf des erfindungsgemäßen zweiten Verfahrens dies der Fall ist, kann beispielsweise ein entsprechendes Bit/Flag gesetzt werden, das im Schritt 34 ausgewertet wird. Nach Schritt 34 wird zu Schritt 35 übergegangen, in dem zum einen überprüft wird, ob die aktive Bremse noch eine verzögernde Wirkung aufweist (NoBrake=0 entspricht hier beispielsweise einer noch vorhandenen Verzögerung). Dies kann beispielsweise dadurch geschehen, dass die aktive Bremse selbsttätig, beispielsweise in Folge einer Eigendiagnose, ein entsprechendes Signal (NoBrake) auf ein Bussystem des Fahrzeugs, beispielsweise einen CAN-Bus, legt. Ist dieses Flag bzw. das Signal gesetzt (NoBrake=1) oder vorhanden, wird zum anderen zusätzlich überprüft, ob der Zeitraum $T_{Zähler}$ dem applizierbaren Zeitraum $T_{NoBrake}$ entspricht oder alternativ unmittelbar zum Schritt 36 übergegangen.

Für den Fall, daß das entsprechende Signal (NoBrake) nicht vorliegt (NoBrake=0), die aktive Bremse also noch eine Verzögerung aufweist, wird überprüft, ob der Zeitraum $T_{Zähler}$ dem applizierbaren Zeitraum $T_{NoBrake}$ entspricht. Der applizierbare Zeitraum $T_{NoBrake}$ kann beispielsweise so dimensioniert sein, daß nach 0.5 s in jedem Fall in den Antriebsmodus übergegangen wird. Mit anderen Worten, es wird überprüft, ob die Zeitspanne $T_{NoBrake}$ vergangen ist ohne dass in Schritt 35 festgestellt worden ist, dass die aktive Bremse im wesentlichen keine verzögernde Wirkung mehr aufweist. Es wird also überprüft, ob nach einer applizierbaren Zeitspanne ($T_{NoBrake}$) die aktive Bremse druckfrei ist oder ob die aktive Bremse noch eine geringe verzögernde Wirkung aufweist. Wird in Schritt 35 festgestellt, dass der Zeitpunkt noch nicht erreicht ist, wird zu Schritt 32 des Verfahrens zurückgesprungen und das Verfahren entsprechend fortgesetzt.

Für den Fall, daß im Schritt 35 festgestellt wird, daß das entsprechende Signal (NoBrake) nicht vorliegt und der Zeitraum $T_{Zähler}$ auch noch nicht dem applizierbaren Zeitraum $T_{NoBrake}$ entspricht, wird von Schritt 35 zu Schritt 32 übergegangen.

In Schritt 36 wird der Übergang in den ersten Betriebsmodus vorgenommen. Mit anderen Worten, wenn die Sollbeschleunigung ($a_{Soll}$) größer ist als die Beschleunigung die durch das Schleppmoment des Motors hervorgerufen wird ($a_{Schlepp}$) und die Bremse des Kraftfahrzeugs im wesentlichen keine verzögernde Wirkung mehr aufweist (NoBrake=1), wird nach Schritt 36 in den Motormodus/ersten Betriebsmodus übergegangen.

Praktisch gesehen wird eine Anforderung für den ersten Betriebsmodus/Antriebsmodus immer dann vorliegen, wenn der angeforderte Beschleunigungssollwert ($a_{Soll}$) den Wert der Beschleunigung aufgrund des Schleppmomentes ($a_{Schlepp}$) übersteigt.

Figur 4 zeigt die Auswirkungen der erfindungsgemäßen Verfahren auf den Zusammenhang zwischen dem von einem ACC-Steuergerät 10 angeforderten Beschleunigungssollwert ($a_{Soll}$) und dem realen Istwert der Beschleunigung ($a_{Ist}$), mit der das Fahrzeug real beschleunigt wird. Auf der horizontalen Achse ist die Sollbeschleunigung ($a_{Soll}$) dargestellt, während die reale Istbeschleunigung ($a_{Ist}$) auf der Vertikalen dargestellt ist. Die reale Istbeschleunigung ($a_{Ist}$) ist in positiver Richtung durch ein Maximalwert ($a_{Max}$) und in negativer Richtung durch ein Minimalwert ($a_{Min}$) auf Werte begrenzt, die die physikalischen Grenzen des Motors des Kraftfahrzeugs darstellen. Es sei angenommen, dass sich die Beschleunigungsanforderung ($a_{Soll}$) aufgrund einer bestimmten Gaspedalstellung verringert. Hierbei würde man sich in der Darstellung nach Figur 4 beispielsweise auf der mit 40 gekennzeichneten Kennlinie in Richtung niederer Sollbeschleunigungswerte ($a_{Soll}$) bewegen. Bei sich weiterer verringernder Sollbeschleunigungsanforderung ($a_{Soll}$) würde die Beschleunigungsanforderung nach der Kennlinie 40 zu einem bestimmten Zeitpunkt in den negativen Bereich übergehen. Bei sich weiter verringernder Sollbeschleunigungsanforderung wird zu einem bestimmten Zeitpunkt der Beschleunigungswert erreicht, der der Beschleunigung entspricht, die durch das Schleppmoment des Kraftfahrzeugs hervorgerufen wird ($a_{Schlepp}$). Von diesem Punkt an bewegt sich der Verlauf der Sollbeschleunigung bei weiter verringerten bzw. bei negativeren Sollbeschleunigungswerten ($a_{Soll}$) auf der Kennlinie 41 in Richtung des Schwellenwertes ($a_{Schwell}$). Erreicht die Sollbeschleunigungsanforderung ($a_{Soll}$) Werte, die kleiner (negativer) als der Schwellenwert ($a_{Schwell}$) sind, wird vom Antriebs- in den Bremsmodus übergegangen. Dieser Übergang ist durch den Sprung der Kennlinie 43 gekennzeichnet. Durch diese Darstellung wird deutlich, dass nicht unmittelbar nach Unterschreiten des Schleppmoments auf die Ansteuerung der Bremse übergegangen wird, sondern dass zuvor ein gewisser Hysteresebereich überschritten werden muss, der sich aus der Differenz des Schwellenwertes ($a_{Schwell}$) und der Beschleunigung aufgrund des Schleppmomentes ($a_{Schlepp}$) ergibt. Ist dieser Hysteresebereich überschritten, wird unmittelbar auf die Ansteuerung der Bremse übergegangen.

Der entsprechend entgegengesetzte Fall liegt vor, wenn sich das Kraftfahrzeug in einem Zustand der aktiven Bremsung befindet und das Fahrzeug verzögert wird. Hierbei befindet man sich in der Darstellung nach Figur 4 beispielsweise an einem beliebigen Punkt der mit 42 gekennzeichneten Kennlinie. Steigt nun die Sollbeschleunigungsanforderung ($a_{Soll}$) an, wird die Kennlinie 42 in Richtung steigender Sollbeschleunigungswerte ($a_{Soll}$) und steigender Istbeschleunigungswerte ($a_{Ist}$) durchfahren. Die Abfragebedingung, dass im wesentlichen keine weitere verzögernde Wirkung der aktiven Bremse mehr vorliegt, ist in der Darstellung nach Figur 4 nicht dargestellt. Ist dies der Fall, dass im wesentlichen keine verzögernde Wirkung der aktiven Bremse vorliegt, wird bei weiter ansteigenden Sollbeschleunigungswerten ($a_{Soll}$) in den ersten Betriebsmodus übergegangen. Wird vom zweiten Betriebsmodus in den ersten Betriebsmodus übergegangen, springt der Arbeitspunkt in der Darstellung nach Figur 4 von der Kennlinie 42 zur Kennlinie 40.

Praktisch erfolgt der Übergang in den ersten Betriebsmodus ab Erreichen von Sollbeschleunigungswerten ($a_{Soll}$), die größer als die Beschleunigung aufgrund des Schleppmoments ($a_{Schlepp}$) sind und wenn im wesentlichen keine weitere verzögernde Wirkung der aktiven Bremse vorliegt.

Figur 5 zeigt einen möglichen Verlauf, einer eine Hysterese repräsentierenden Größe ($a_{Hysterese}$) entsprechend des ersten erfindungsgemäßen Verfahrens. Hierbei ist die die Hysterese repräsentierende Größe ($a_{Hysterese}$) auf der senkrechten Achse in Abhängigkeit von der Zeit (t) auf der waagerechten Achse dargestellt. Der Hysteresewert ($a_{Hysterese}$) entsprechend Figur 5 wird in diesem Ausführungsbeispiel aus der Differenz des Schwellenwertes ($a_{Schwell}$) und des Schleppwertes ($a_{Schlepp}$) entsprechend der Kennlinie 41 in Figur 4 bestimmt. Der Wertebereich der die Hysterese repräsentierenden Größe ($a_{Hysterese}$) ist durch den Maximalwert ($a_{HystereseMax}$) und den Minimalwert ($a_{HystereseMin}$) begrenzt. Zu Beginn des erfindungsgemäßen Verfahrens nimmt der Wert für die Hysterese ($a_{Hysterese}$) den Maximalwert ($a_{HystereseMax}$) ein. Ab dem Zeitpunkt, ab dem die Sollbeschleunigung ($a_{Soll}$) kleiner als die ein Schleppmoment repräsentierende Größe ($a_{Schlepp}$) wird, dieser Zeitpunkt wird als $T_{Bremse}$ bezeichnet, fällt der Wert für die eine Hysterese repräsentierende Größe ($a_{Hysterese}$) linear vom Maximalwert ($a_{HystereseMax}$) auf den Minimalwert ($a_{HystereseMin}$) ab. Die Steigung des Abfalls, die durch den Quotienten der eingezeichneten Strecken 51 zu 50 zum Ausdruck gebracht werden kann, ist proportional zur Differenz aus Sollbeschleunigung ($a_{Soll}$) und Beschleunigung aufgrund des Schleppmoments ($a_{Schlepp}$):

$$\frac{\text{Strecke 51}}{\text{Strecke 50}} = \text{Konstante} \cdot (a_{Soll} - a_{Schlepp})$$

Durch diese erfindungsgemäße Ausgestaltung der Steigung, mit der die die Hysterese repräsentierende Größe (aHysterese) linear reduziert wird, kann in besonders vorteilhafter Weise auf dynamische Veränderungen der Beschleunigungsanforderung eingegangen werden, da hohe Sollbeschleunigungsanforderungen ($a_{Soll}$) unmittelbar zu einem stärkeren Abfall der die Hysterese repräsentierenden Größe ($a_{Hysterese}$) führen. Der Vorteil dieses zeitlichen Abfalls der die Hysterese repräsentierenden Größe ($a_{Hysterese}$) wird auch in Zusammenschau mit der Darstellung nach Figur 4 deutlich: Es sei angenommen, dass eine Sollbeschleunigungsanforderung ($a_{Soll}$) vorliegt, die in der Mitte der Strecke 41 nach Figur 4 liegt, also zwischen den Werten für ($a_{Schwell}$) und ($a_{Schlepp}$). Entsprechend der Darstellung nach Figur 4 würde auch dann nicht vom Motor in den Bremsbetrieb bzw. vom ersten in den zweiten Betriebsmodus übergegangen werden, wenn dieser bestimmte Sollbeschleunigungsanforderungswert ($a_{Soll}$) für einen längeren Zeitraum als Anforderungssignal vorliegt. Entsprechend der Darstellung nach Figur 5 verringert sich jedoch die Strecke 41 bzw. der Wert für die die Hysterese repräsentierende Größe ($a_{Hysterese}$), die der Differenz aus Schwellenwert ($a_{Schwell}$) und Schleppwert ($a_{Schlepp}$) entspricht, mit der Zeit. Hierdurch wird erreicht, dass ab einem bestimmten Zeitpunkt der Wert für $a_{Hysterese}$ so klein ist, dass im jeden Fall vom Motorbetrieb in den Bremsmodus übergegangen wird. Hierzu ist es besonders vorteilhaft, dass der $a_{HystereseMin}$-Wert zu 0 gesetzt wird, so dass nach einem bestimmten Zeitpunkt selbst dann in den Bremsmodus übergegangen wird, wenn als Sollbeschleunigungsanforderung ($a_{Soll}$) eine Beschleunigungsanforderung vorliegt, die in der Größenordnung der Beschleunigung liegt, die durch das Schleppmoment des Motors hervorgerufen wird ($a_{Schlepp}$). Als maximaler Hysteresewert ($a_{HystereseMax}$) kann beispielsweise eine Beschleunigung in der Größenordnung der Beschleunigung aufgrund des Schleppmomentes ($a_{Schlepp}$) gewählt werden.

Es liegt weiterhin im Rahmen der erfindungsgemäßen Verfahren, dass die Signale der aktiven Bremse der unterschiedlichen Achsen (Vorder- und Hinterachse) unterschiedlich ausgewertet werden. So ist es beispielsweise möglich, dass bei einer bestimmten Sollbeschleunigungsanforderung ($a_{Soll}$) die angetriebene Achse derart gewählt wird, dass die Bremsen hier nicht angesteuert werden, sondern lediglich das Schleppmoment des Motors als verzögernde Wirkung ausgenützt wird, während an der freilaufenden Achse bereits die aktiven Bremsen angesteuert werden.

## Patentansprüche

1.  Verfahren zur adaptiven Abstands- und/oder Fahrgeschwindigkeitsregelung bei einem Kraftfahrzeug, wobei wenigstens in einem ersten Betriebsmodus ein Motor des Kraftfahrzeugs und in einem zweiten Betriebsmodus eine Bremse des Kraftfahrzeugs von einem Steuergerät ansteuerbar ist, wobei

    - eine Grösse (aSoll) ermittelt wird, die eine Sollverzögerung oder eine Sollbeschleunigung repräsentiert und
    - bei einem Betrieb im ersten Betriebsmodus dann in den zweiten Betriebsmodus übergegangen wird, wenn die Grösse (aSoll) in einem vorgebbaren Wertebereich liegt, der in Abhängigkeit von einer ein Schleppmoment des Motors repräsentierenden Grösse (aSchlepp) bestimmt wird und alle Werte umfasst, die unterhalb eines Schwellenwerts (aSchwell) liegen,
    **dadurch gekennzeichnet, dass**
    - ein Schwellenwert (aSchwell) durch Subtraktion einer eine Hysterese repräsentierenden Grösse (aHysterese) von der das Schleppmoment repräsentierenden Grösse (aSchlepp) gebildet wird, und
    - die die Hysterese repräsentierende Grösse (aHysterese) ab einem bestimmbaren Zeitpunkt (TBremse) linear mit der Zeit (t) von einem Maximalwert (aHystereseMax) auf einen Minimalwert (aHystereseMin) abnimmt.

2.  Verfahren nach Anspruch 1, **dadurch gekennzeichnet, dass** der bestimmbare Zeitpunkt (TBremse) der Zeitpunkt ist, an dem die die Sollverzögerung oder eine Sollbeschleunigung repräsentierende Grösse (aSoll) kleiner als die ein Schleppmoment repräsentierende Grösse (aSchlepp) wird.

3.  Verfahren nach Anspruch 1, **dadurch gekennzeichnet, dass** die Steigung, mit der die die Hysterese repräsentierende Grösse (aHysterese) linear mit der Zeit abnimmt, proportional zu der Differenz aus der die Sollverzögerung oder die Sollbeschleunigung repräsentierenden Grösse (aSoll) und der das Schleppmoment repräsentierenden Grösse (aSchlepp) ist.

4.  Verfahren nach Anspruch 1, **dadurch gekennzeichnet, dass** die ein Schleppmoment repräsentierende Grösse (aSchlepp) in Abhängigkeit von der Steigung des Fahrweges bestimmt wird, auf dem sich das Kraftfahrzeug befindet.

**5.** Verfahren nach Anspruch 4, **dadurch gekennzeichnet, dass** nach einem Bremseingriff eine Schätzung der Steigung in einem Schnellverfahren durchgeführt wird.

**6.** Verfahren nach Anspruch 5, **dadurch gekennzeichnet, dass** zur Steigungsschätzung wenigstens eine ein Motorausgangsmoment repräsentierende Grösse und eine eine Istbeschleunigung des Kraftfahrzeugs repräsentierende Grösse berücksichtigt werden.

**7.** Verfahren nach einem der vorstehenden Ansprüche, **dadurch gekennzeichnet, dass** bei einem Betrieb im zweiten Betriebsmodus dann in den ersten Betriebsmodus übergegangen wird, wenn die Bremse im wesentlichen keine verzögernde Wirkung mehr aufweist.

**8.** Verfahren nach Anspruch 7, **dadurch gekennzeichnet, dass** die Bremse dann, wenn keine verzögernde Wirkung mehr vorliegt, ein entsprechendes Signal (NoBrake) auf einem Bussystem (CAN) zur Verfügung stellt.

**9.** Verfahren nach Anspruch 8, **dadurch gekennzeichnet, dass** in dem Fall, in dem nicht innerhalb einer vorbestimmten oder vorgebbaren Zeit (TNoBrake) das entsprechende Signal (NoBrake) von der Bremse vorliegt, unmittelbar in den ersten Betriebsmodus übergegangen wird.

## Claims

**1.** Method for adaptive distance and/or driving speed adjustment in a motor vehicle, wherein at least in a first operating mode an engine of the motor vehicle can be actuated, and in a second operating mode a brake of the motor vehicle can be actuated, by a control device, wherein

- a variable (asetp) which represents a setpoint deceleration or a setpoint acceleration is acquired, and
- during operation in the first operating mode the system changes to the second operating mode if the variable (asetp) is in a predefinable value range which is determined as a function of a variable (adrag) representing a drag torque of the engine and which includes all the values which are below a threshold value (athresh),
**characterized in that**
- a threshold value (athresh) is formed by subtracting a variable (ahysteresis) representing a hysteresis from the variable (adrag) representing the drag torque, and
- the variable (ahysteresis) representing the hysteresis decreases linearly over time (t) from a maximum value (ahysteresismax) to a minimum value (ahysteresismin), starting from a predeterminable time (Tbrake).

**2.** Method according to Claim 1, **characterized in that** the time (Tbrake) which can be determined is the time at which the variable (asetp) representing the setpoint deceleration or a setpoint acceleration is smaller than the variable (adrag) representing a drag torque.

**3.** Method according to Claim 1, **characterized in that** the gradient with which the variable (ahysteresis) representing the hysteresis decreases linearly over time is proportional to the difference between the variable (asetp) representing the setpoint deceleration or the setpoint acceleration and the variable (adrag) representing the drag torque.

**4.** Method according to Claim 1, **characterized in that** the variable (adrag) representing a drag torque is determined as a function of the gradient of the roadway on which the motor vehicle is located.

**5.** Method according to Claim 4, **characterized in that** after a braking intervention the gradient is estimated in a high-speed process.

**6.** Method according to Claim 5, **characterized in that** at least one variable representing an engine output torque and one variable representing an actual acceleration of the motor vehicle are taken into account for the estimation of the gradient.

**7.** Method according to one of the preceding claims, **characterized in that** during operation in the second operating mode the system changes into the first operating mode if the brake essentially no longer has any decelerating effect.

**8.** Method according to Claim 7, **characterized in that** if there is no longer any decelerating effect, the brake makes available a corresponding signal (NoBrake) on a bus system (CAN).

**9.** Method according to Claim 8, **characterized in that** if the corresponding signal (NoBrake) from the brake does not occur within a predetermined or predefinable time (TNoBrake), the system changes directly into the first operating mode.

**Revendications**

**1.** Procédé de régulation adaptative de la distance et/ou de la vitesse d'un véhicule automobile, dans lequel au moins dans un premier mode de fonctionnement, un moteur du véhicule automobile et dans un deuxième mode de fonctionnement un frein du véhicule automobile peuvent être commandés par un appareil de commande et dans lequel :

- une grandeur (aSoll) qui représente une décélération de consigne ou une accélération de consigne est déterminée,
- en fonctionnement dans le premier mode de fonctionnement, on passe dans le deuxième mode de fonctionnement lorsque la grandeur (aSoll) est située dans une plage de valeurs prédéterminable qui est définie en fonction d'une grandeur (aSchlepp) qui représente le couple de patinage du moteur et qui comprend toutes les valeurs situées en dessous d'une valeur de seuil (aSchwell),
**caractérisé en ce que**
- la valeur de seuil (aSchwell) est formée en soustrayant une grandeur (aHysterese) qui représente l'hystérèse de la grandeur (aSchlepp) qui représente le couple de patinage et
- **en ce qu'**à partir d'un instant défini (TBremse), la grandeur (aHysterese) qui représente l'hystérèse diminue linéairement en fonction du temps (t) depuis une valeur maximale (aHystereseMax) jusqu'à une valeur minimale (aHystereseMin).

**2.** Procédé selon la revendication 1, **caractérisé en ce que** l'instant défini (TBremse) est l'instant auquel la grandeur (aSoll) qui représente une décélération de consigne ou une accélération de consigne est plus petite que la grandeur (aSchlepp) qui représente le couple de patinage.

**3.** Procédé selon la revendication 1, **caractérisé en ce que** la pente suivant laquelle la grandeur (aHysterese) qui représente l'hystérèse diminue linéairement en fonction du temps est proportionnelle à la différence entre la grandeur (aSoll) qui représente une décélération de consigne ou une accélération de consigne et la grandeur (aSchlepp) qui représente le couple de patinage.

**4.** Procédé selon la revendication 1, **caractérisé en ce que** la grandeur (aSchlepp) qui représente le couple de patinage est déterminée en fonction de la pente de la route sur laquelle le véhicule automobile se trouve.

**5.** Procédé selon la revendication 4, **caractérisé en ce qu'**après une intervention sur les freins, la pente est estimée à l'aide d'un procédé rapide.

**6.** Procédé selon la revendication 5, **caractérisé en ce qu'**au moins une grandeur qui représente le couple de sortie du moteur et une grandeur qui représente l'accélération effective du moteur sont prises en compte dans l'estimation de la pente.

**7.** Procédé selon l'une des revendications précédentes, **caractérisé en ce qu'**en fonctionnement dans le deuxième mode de fonctionnement, on passe au premier mode de fonctionnement lorsque les freins ne présentent essentiellement plus d'effet de décélération.

**8.** Procédé selon la revendication 7, **caractérisé en ce que** lorsque l'effet de décélération des freins a disparu, un signal (NoBrake) qui l'indique est appliqué sur un système de bus (CAN).

**9.** Procédé selon la revendication 8, **caractérisé en ce qu'**au cas où le signal (NoBrake) n'est pas émis par les freins pendant une durée (TNoBrake) prédéterminée ou prédéterminable, on passe directement dans le premier mode de fonctionnement.

# Figur 1

**Stand der Technik**

Fahrzeug 15

Aktuatoren 14

Fahrer 12

Radar 11

ACC-Steuer-gerät 10

Längs-regler (LOC) 13

# Figur 4

$a_{Ist}$

$a_{Max}$

$a_{Schwell}$

41

$a_{Schlepp}$

43

40

$a_{Soll}$

42

$a_{Min}$

# Figur 5

$a_{Hysterese}$

50

$a_{HystereseMax}$

51

$a_{HystereseMin}$

$T_{Bremse}$

t

# Figur 2

```
20 ┌──────────────────┐
   │      Start        │
   └──────────────────┘
            │
            ▼
21 ┌──────────────────┐         Nein
   │   Motormodus ?    │──────────────┐
   └──────────────────┘              │
            │ Ja                     │
            ▼                        │
23 ┌──────────────────┐             │
   │  Best. aHysterese │             │
   └──────────────────┘             │
            │                        │
            ▼                        │
24 ┌──────────────────────┐         │
   │ Best. aSoll, aSchlepp │◄────────┤
   └──────────────────────┘         │
            │                        │
            ▼                        │
   ┌──────────────────────┐         │
   │  aSoll < aSchlepp -   │  Ja     │
   │     aHysterese?       │───► Bremsmodus 26
   └──────────────────────┘    (→ Motormodus 21)
25          │ Nein                   │
            ▼                        │
27 ┌──────────────────────┐         │
   │  aSoll < aSchlepp ?   │         │
   └──────────────────────┘         │
       │ Ja          │ Nein    28   │
       ▼             ▼              │
   ┌─────────┐   ┌──────────────┐  │
29 │aHysterese│   │ aHysterese = │  │
   │verkleinern│  │ aHystereseMax │ │
   └─────────┘   └──────────────┘  │
       │             │              │
       └─────►○◄─────┘              │
                                    │
                     ┌──────────────▼──┐
                     │    Figur 3        │
                     └──────────────────┘
                       22
```

# Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0922388 A

### In der Beschreibung aufgeführte Nicht-Patentliteratur

- **Winner ; Witte ; Uhler ; Lichtenberg ; Robert Bosch GmbH.** Adaptive Cruise Control System - Aspects an Development Trends. *SAE Technical Paper Series 961010, International Congress & Exposition, Detroit,* 26. Februar 1996